Europäisches Patentamt

European Patent Office

Office européen des brevets

(11) Veröffentlichungsnummer: **0 135 796**
A2

(12) # EUROPÄISCHE PATENTANMELDUNG

(21) Anmeldenummer: **84109918.7**

(22) Anmeldetag: **21.08.84**

(51) Int. Cl.⁴: **C 02 F 3/00**, C 02 F 3/10, B 01 F 5/00

(30) Priorität: **02.09.83 DE 3331758**

(43) Veröffentlichungstag der Anmeldung: **03.04.85** **Patentblatt 85/14**

(84) Benannte Vertragsstaaten: **AT BE CH DE FR GB IT LI NL SE**

(71) Anmelder: **Linde Aktiengesellschaft, Abraham-Lincoln-Strasse 21, D-6200 Wiesbaden (DE)**

(72) Erfinder: **Morper, Manfred, Dr.rer.nat., Zugspitzstrasse 13, D-8035 Gauting (DE)**

(74) Vertreter: **Schaefer, Gerhard, Dr., Linde Aktiengesellschaft Zentrale Patentabteilung, D-8023 Höllriegelskreuth (DE)**

(54) Verfahren und Vorrichtung zur biologischen Reinigung von Flüssigkeiten und/oder Flüssigkeits-Feststoffgemischen.

(57)    Die Erfindung betrifft ein Verfahren zur biologischen Reinigung von organische Schmutzstoffe enthaltenden Flüssigkeiten und/oder Flüssigkeits-Feststoffgemischen sowie eine Vorrichtung zur Durchführung des Verfahrens. Die zu behandelnden Flüssigkeiten und/oder Flüssigkeits-Feststoffgemische werden dabei durch einen Reaktor geleitet, in dem die Schmutzstoffe mit Hilfe von auf mindestens einem Trägerelement angesiedelten Mikroorganismen gegebenenfalls unter Zufuhr von Sauerstoff und/oder Sauerstoff enthaltenden Gasen abgebaut werden. Um auf einfache Weise unter Einhaltung geringer Investitions- und Betriebskosten einen möglichst hohen Wirkungsgrad zu erreichen, wird mit Hilfe des Trägerelements in der Strömung eine vollständige statische Durchmischung im Mikrobereich erzeugt.

0135796

Verfahren und Vorrichtung zur biologischen
Reinigung von Flüssigkeiten und/oder Flüs-
sigkeits-Feststoffgemischen

Die Erfindung betrifft ein Verfahren zur biologischen Reinigung von organische Schmutzstoffe enthaltenden Flüssigkeiten und/oder Flüssigkeits-Feststoffgemischen, bei dem die
Flüssigkeiten und/oder die Flüssigkeits-Feststoffgemische
durch einen Reaktor geleitet werden, in dem die Schmutzstoffe mit Hilfe von auf mindestens einem Trägerelement
angesiedelten Mikroorganismen gegebenenfalls unter Zufuhr
von Sauerstoff und/oder Sauerstoff enthaltenden Gasen abgebaut werden, sowie eine Anlage zur Durchführung des Verfahrens.

Bei herkömmlichen Verfahren zur aeroben mikrobiellen Elimination von Abwasserinhaltsstoffen, wie z.B. bei Belebungsverfahren, ist die Versorgung der Mikroorganismen mit
ausreichend Sauerstoff aufgrund des hohen Energieaufwandes
für den Eintrag des Sauerstoffs in die Flüssigkeit der
bedeutendste Faktor der Betriebskosten. Bei Tropfkörperverfahren ist zwar die Sauerstoffversorgung keine kritische Größe, jedoch sind hier bei stärkeren Abwasserströmen
die Bauvolumina und damit die Investitionskosten sowie der
Platzbedarf so groß, daß sie in großem Maßstab selten verwirklicht werden.

0135796

Bei der anaeroben mikrobiellen Umwandlung von organischen Abwasserinhaltsstoffen weitgehend in Methan und Kohlendioxid ist ein wesentliches Problem dadurch gegeben, daß bei komplex zusammengesetzten Abwässern ein Teil der als CSB ausgedrückten organischen Fracht in schwer metabolisierbarer Form, wie z.B. als ungelöste Feststoffe, Polymere oder polykondensierte Aromate, vorliegt und diese Schmutzstoffe durch fermentative Bakterien erst in angreifbare Teile zersetzt werden müssen, wodurch lange Reaktionszeiten und großvolumige Reaktoren erforderlich sind. Im Gebrauch sind derzeit die verschiedensten Anaerobreaktoren, wie z.B. Wirbelbettreaktoren, Festbettreaktoren oder UASB-Reaktoren (upflow anaerobic sludge bed reactor).Die wesentlichen Nachteile bei den verschiedenen Reaktortypen sind folgende: Beim Wirbelbettreaktor, bei dem die Biomasse auf einem Trägermaterial, wie Sand und Aktivkohle, fixiert und dieses durch die Flüssigkeitsströmung sowie eventuell durch Gaseinpressung fluidisiert wird, ist der Energieaufwand zur Aufrechterhaltung der Fluidisierung recht hoch. Außerdem sind Sondereinrichtungen für die Trennung von Biomasse und Trägermaterial erforderlich. Beim Festbettreaktor, bei dem die Biomasse auf mineralischen Stoffen oder Kunststoffen als Trägermaterial fixiert und dieses im Auf- oder Abstrom durchströmt wird, ergibt sich eine ungenügende Reaktorausnutzung durch die Bildung von Kanälen und Vorzugsströmen im Festbett. Außerdem ist bei hoch verschmutzten Abwässern die Gefahr einer Verstopfung des Festbetts leicht gegeben. Beim UASB-Reaktor,bei dem zu behandelndes Abwasser im Aufstrom durch ein Schlammbett geleitet wird, ist das Zustandekommen des Schlammbettes auf das Vorhandensein von sich gut absetzendem körnigem Schlamm angewiesen, dessen Bildung aber nicht beeinflußt werden kann. Außerdem ist bei zu hoher Gasentwicklung die Gefahr von Schlammverlusten durch Flotationseffekte gegeben.

Der Erfindung liegt die Aufgabe zugrunde, ein Verfahren der eingangs genannten Art sowie eine zur Durchführung des Verfahrens geeignete Anlage so auszugestalten, daß die vorstehend beschriebenen Nachteile nicht auftreten und auf einfache Weise unter Einhaltung geringer Investitions- und Betriebskosten ein möglichst hoher Wirkungsgrad erreicht werden kann.

Diese Aufgabe wird erfindungsgemäß dadurch gelöst, daß mit Hilfe des Trägerelements in der Strömung eine vollständige statische Durchmischung im Mikrobereich erzeugt wird.

Aufgrund dieser Verfahrensweise wird die auf dem Trägerelement fixierte Biomasse und die die organischen Schmutzstoffe enthaltende Flüssigkeit sowie gegebenenfalls das bei einem aeroben mikrobiellen Abbau zuzuführende sauerstoffhaltige Gas ständig in engen Kontakt gebracht, so daß dauernd eine Grenzflächenerneuerung erreicht wird, ohne daß eine Umwälzung durch mechanische Mischeinrichtungen notwendig ist und somit dafür keine zusätzliche Energie bereitgestellt werden muß. Dazu kommt, daß die Trägerelemente nicht nur zur Erzeugung dieser Strömung, sondern auch als Ansiedlungsfläche für Mikroorganismen dienen, wodurch die Konzentration und damit die Raumabbauleistung hochgehalten werden kann. Die Aufrechterhaltung einer hohen Raumabbauleistung wird dabei noch durch die Bedingung der statischen Durchmischung im Mikrobereich insofern unterstützt, als dadurch verhindert werden kann, daß durch zu starke Turbulenzen die fixierte Biomasse vom Trägerelement abgerissen und gegebenenfalls mit behandelter Flüssigkeit ausgetragen wird.

Geeignet ist das erfindungsgemäße Verfahren sowohl zum aeroben Abbau unter Zufuhr eines zumindest sauerstoffhaltigen Gases als auch zum anaeroben Abbau unter Er-

-.-

zeugung von Faulgas. Im ersten Fall kann das erfindungsgemäße Verfahren zum Abbau organischer Kohlenstoffverbindungen sowie
zur Nitrifikation von städtischem und industriellem Abwasser genutzt werden. Im zweiten Fall können organische
Substrate in städtischem und industriellem Abwasser, in
Abwasserschlämmen sowie in organischen Rest- und Abfallstoffen abgebaut werden, wobei allerdings für die Verarbeitung organischer Feststoffe genügend Zell- und Oberflächenwasser vorhanden sein muß.

Eine Anlage zur Durchführung des Verfahrens umfaßt mindestens einen Reaktor, der einen Zulauf und einen Ablauf
und gegebenenfalls eine Gaszuleitung sowie eine Gasableitung aufweist und in dem mindestens ein Trägerelement
als Ansiedlungsfläche für die schmutzabbauenden Mikroorganismen vorhanden ist. Erfindungsgemäß ist ein solcher
Reaktor dadurch gekennzeichnet, daß das Trägerelement
eine gewellte und/oder gerippte Oberfläche aufweist und
gegebenenfalls auch die Reaktorwände zumindest teilweise
eine gewellte und/oder gerippte Oberfläche aufweisen.

Durch die gewellte und/oder gerippte Ausbildung der Oberfläche des Trägerelements und gegebenenfalls auch der
Reaktorwände werden in der Flüssigkeitsströmung Wirbel
mit Mikroturbulenzen erzeugt, die für eine intensive
aber schonende Durchmischung von zu behandelnder Flüssigkeit, Biomasse und gegebenenfalls sauerstoffhaltigem
Gas sorgen.

Wird ein aerober Abbau der organischen Schmutzstoffe mit
Einleitung von Sauerstoff und/oder sauerstoffhaltigen
Gasen durchgeführt, beispielsweise zum Abbau von organischen Kohlenstoffverbindungen oder zur Nitrifikation,
kann das Gas grobblasig, d.h. unter geringem Energieaufwand, eingetragen werden, da die groben Gasblasen auf-

-.-

grund der Oberflächenstruktur der Trägerelemente und der damit verbundenen Wirbelbildung in kleine Gasblasen zerteilt werden. Diese hängen sich jeweils in den Vertiefungen der Trägerelemente oder Wandflächen bis zur annähernd vollständigen Aufzehrung fest. Dadurch wird eine sehr hohe Sauerstoffausnutzung erreicht und der Energieaufwand für die Sauerstoffversorgung der Mikroorganismen sehr gering gehalten.

Bei einem anaeroben Abbau der organischen Schmutzstoffe sammelt sich dagegen das entstehende Faulgas in den jeweiligen Vertiefungen der Trägerelemente oder Wandflächen und steigt nur langsam zur Gasentnahmestelle auf, wodurch eine Flotationsbewegung der nicht an den Trägerelementen anhaftenden Biomasse verhindert wird. Außerdem wirken sich bei einem anaeroben Abbau die durch die gewellte und/oder gerippte Oberflächenstruktur erzeugten Mikroturbulenzen insofern besonders günstig aus, als dadurch bei der Durchmischung keine destruktiven Scherkräfte gebildet und symbiotisch lebende Bakterien, wie z.B. Acetat- und Methanbakterien,nicht auseinander gerissen werden.

Vorteilhafterweise kann das Trägerelement als Rohr und/oder als Platte ausgebildet sein. Als geeignete Materialien kommen Kunststoff, Metall oder Keramik oder entsprechende Verbundwerkstoffe in Frage, wobei eine Oberflächenrauhigkeit die Ansiedlung der Biomasse und deren Fixierung begünstigt. Als leicht zu handhabende Trägerelemente eignen sich beispielsweise flexible, gewellte Kunststoffrohre, wie sie als Leerrohr für Isolationszwecke in verschiedenen Stärken und Durchmessern bereits hergestellt werden. Aber auch Kunststoffplatten mit gewellter Oberfläche, wie sie beispielsweise für Dacheindeckungen verwendet werden,können als Trägerelemente eingesetzt werden.

0135796

Dabei ist es zur Erreichung einer möglichst großen Ansiedlungsfläche besonders zweckmäßig, mehrere Trägerelemente
parallel nebeneinander und/oder übereinander und/oder
hintereinander anzuordnen. Falls mehrere Trägerelemente
hintereinander angeordnet werden, ist es zweckmäßig, diese
versetzt zueinander anzubringen und/oder zwischen den
hintereinander angeordneten Trägerelementen Mischkammern
auszubilden.Dadurch wird verhindert, daß sich auf der Länge
der hintereinander angeordneten Trägerelemente unterschiedliche Betriebsverhältnisse einstellen.

Eine weitere vorteilhafte Möglichkeit, eine große Ansiedlungsfläche und gleichzeitig auch eine gute Durchmischung
zu verwirklichen, besteht bei Verwendung rohrförmiger
Trägerelemente darin, diese ineinandergeschoben anzuordnen.
Dabei können in einem Außenrohr mehrere Innenrohre nebeneinander oder aber auch konzentrisch zueinander verlegt
sein.

Insbesondere im Hinblick auf einen Gaseintrag bei Anwendung der erfindungsgemäßen Anlage für einen aeroben Abbau
ist es weiterhin zweckmäßig, die Trägerelemente gegen die
Horizontale geneigt anzuordnen. Dadurch können sich die
eingetragenen Gasblasen jeweils in den Vertiefungen an
der Unterseite der Trägerelemente zumindest eine Zeit lang
festhängen, bis sie aufgrund der Flüssigkeitsströmung und
der Wirbelbildung teils in die nächste Vertiefung mitgerissen und dabei nochmals in kleinere Gasblasen aufgeteilt, teils in der Flüssigkeit gelöst werden. Je geringer
dabei die Neigung der Trägerelemente gegen die Horizontale
ist, je länger die Trägerelemente sind und je geringer
die Strömungsgeschwindigkeit ist, desto größer ist die
Wahrscheinlichkeit, daß der eingetragene Sauerstoff ohne
zusätzlichen Energieaufwand nahezu vollständig gelöst
wird. Dabei sind plattenförmige Trägerelemente insofern

0135796

günstiger, als dann an der Unterseite der Platten eine grössere Anzahl von Vertiefungen, in denen die Gasblasen zurückgehalten werden, vorhanden sind, als bei rohrförmigen Trägerelementen.

Aber auch bei einem anaeroben Abbau mit Faulgaserzeugung ist eine gegen die Horizontale geneigte Anordnung der Trägerelemente günstig. Das entstehende Faulgas sammelt sich dabei zunächst in den an der Unterseite vorhandenen Vertiefungen der Trägerelemente und steigt dann allmählich gegen das Gefälle zum Ende der Trägerelemente auf. Dadurch kann die Flotationswirkung des Faulgases unterbunden werden, so daß keine Gefahr besteht, daß die nicht auf den Trägerelementen fixierte Biomasse mit aufsteigenden Gasblasen aus der Reaktionszone ausgetragen wird. Für den anaeroben Abbau sind dabei rohrförmige Trägerelemente insofern günstiger, als dann sich das aufsteigende Gas nur jeweils in den Vertiefungen der oberen Rohrböden ansammeln kann.

Um eine kompakte, platzsparende Bauweise für eine erfindungsgemäßeAnlage zu ermöglichen, ist es zweckmäßig, mehrere rohrförmige Trägerelemente in Außenrohren anzuordnen, die Außenrohre parallel nebeneinander und/oder übereinander anzuordnen und die Außenrohre über eine Einlaßkammer sowie eine Auslaßkammer untereinander zu verbinden. Jedes Außenrohr wirkt dabei als eigener Reaktor mit im Inneren angeordneten rohrförmigen Trägerelementen. Dabei können die rohrförmigen Trägerelemente im Inneren der Außenrohre wiederum parallel nebeneinander oder ineinander geschoben angeordnet sein. Die Außenrohre können eine glatte oder zumindest teilweise eine gewellte Oberfläche aufweisen, wodurch auch durch die Außenrohre die erfindungsgemäße vollständige statische Durchmischung im Mikrobereich erzeugt wird.

Durch einfache Rohrlängenvariation der Außenrohre oder durch die Parallelschaltung weiterer Außenrohre läßt sich ein Reaktor an den Abbau der unterschiedlichst belasteten Flüssigkeiten und/oder Flüssigkeits-Feststoffgemische anpassen. Eine zusätzliche Erweiterungsmöglichkeit besteht darin, einer Einheit, bestehend aus Einlaßkammer und Auslaßkammer und dazwischen verlegten Außenrohren eine weitere gleichartige Einheit vor- oder nachzuschalten. Bei entsprechender Anordung der Anschlußleitungen können dann sogar beide Einheiten übereinander gebaut werden. Eine Wärmeisolierung des gesamten Reaktors ist einfach zu verwirklichen, da einerseits nur die am Außenumfang des Gesamtreaktors angeordneten Außenrohre entsprechend zu isolieren sind und andererseits eine Rohrisolierung eine ständig angewandte Technik darstellt.

In ähnlicher Weise können auch plattenförmige Trägerelemente zu einem Reaktor zusammengefügt werden. Mit Vorteil ist eine entsprechende Anlage dadurch gekennzeichnet, daß mehrere plattenförmige Trägerelemente auf zwei gegenüberliegenden Seiten durch Außenwände begrenzt sind und auf den beiden anderen gegenüberliegenden Seiten über eine Einlaßkammer und eine Auslaßkammer untereinander in Verbindung stehen und daß die Außenwände zumindest mit dem obersten und dem untersten plattenförmigen Trägerelement sowie mit der Einlaßkammer und der Auslaßkammer abschließen. Auch in diesem Fall besteht die Möglichkeit, den Reaktor durch Hinzufügen weiterer plattenförmiger Trägerelemente bei entsprechender Vergrößerung der Einlaß- und Auslaßkammern zu erweitern oder eine zweite, in gleicher Weise mit Einlaßkammer und Auslaßkammer und dazwischen angeordneten plattenförmigen Trägerelementen gebildete Reaktoreinheit auf die erste aufzubauen.

Für einen aufeinanderfolgenden anaeroben und aeroben Abbau ist es schließlich möglich, beispielsweise auf einen aus zwischen Einlaß- und Auslaßkammer verlegten Rohren gebildeten Reaktor für anaeroben Abbau einen aus zwischen Einlaßkammer und Auslaßkammer verlegten plattenförmigen Trägerelementen gebildeten Reaktor für aeroben Abbau anzuordnen.

Für den anaeroben Abbau in einem solchen aus Einlaßkammer und Auslaßkammer und dazwischen verlegten Trägerelementen gebildeten Reaktor ist es von Vorteil, wenn der Anschluß der Trägerelemente an der Einlaßkammer auf höherem Niveau als an der Auslaßkammer vorgesehen ist und die Einlaßkammer eine Ableitung für Faulgas aufweist.

Dadurch müssen die enstehenden Faulgasblasen entgegen der nach unten in Gefällerichtung verlaufenden Strömung der zu behandelnden Flüssigkeit aufsteigen, was einem Austragen von nicht fixierter Biomasse aufgrund einer Flotation entgegenwirkt.

Im Gegensatz dazu ist es für einen aeroben Abbau mit Eintrag eines zumindest sauerstoffhaltigen Gases zweckmäßig, wenn der Anschluß der Trägerelemente an der Einlaßkammer auf niedrigerem Niveau als an der Auslaßkammer vorgesehen ist, der Einlaßkammer eine Gaszuleitung für Sauerstoff und/oder ein sauerstoffhaltiges Gas zugeordnet ist und die Gaszuleitung Zweigleitungen zu zwischen den Trägerelementen gebildeten Zwischenräumen aufweist. Die Strömungsrichtung der Flüssigkeit verläuft somit durch die Trägerelemente schräg nach oben, wobei gleichzeitig ein Gastransport in die gleiche Richtung erfolgt. Dies ist insofern günstig, als das am Anfang der Trägerelemente bei der Einlaßkammer über die Zweigleitungen einströmende Gas sich zunächst in den an der Unterseite der Trägerelemente vorhandenen anfänglichen Vertiefungen sammelt,

-.-

dann durch die Flüssigkeitsströmung und die damit verbundene Wirbelbildung in die nachfolgenden Vertiefungen transportiert und so allmählich auf die gesamte Länge der Trägerelementeverteilt wird. Dabei nimmt jedoch über die gesamte Länge der Trägerelemente gesehen der Anteil an ungelöst vorhandenem Sauerstoff ständig ab, da durch die fortgesetzte Wirbelbildung aufgrund der Wellen- oder Rippenstruktur der Oberfläche der Trägerelemente immer Sauerstoff in Lösung geht.

In der Zeichnung sind zwei Ausführungsbeispiele einer erfindungsgemäßen Anlage zur biologischen Reinigung von organische Schmutzstoffe enthaltenden Flüssigkeiten und/ oder Flüssigkeits-Feststoffgemischen schematisch dargestellt.

Es zeigen:

Figur 1 eine Anlage für einen anaeroben Abbau unter Verwendung rohrförmiger Trägerelemente;

Figur 2 eine Anlage für einen aeroben Abbau unter Verwendung plattenförmiger Trägerelemente;

Figur 3 ausschnittsweise die Zufuhr eines sauerstoffhaltigen Gases und dessen Verteilung bei Trägerelementen mit gerippter Oberfläche;

Figur 4 im Querschnitt zwei mögliche Anordnungen von rohrförmigen Trägerelementen;

Figur 5 im Längsschnitt zwei mögliche Anordnungen von rohrförmigen Trägerelementen hintereinander.

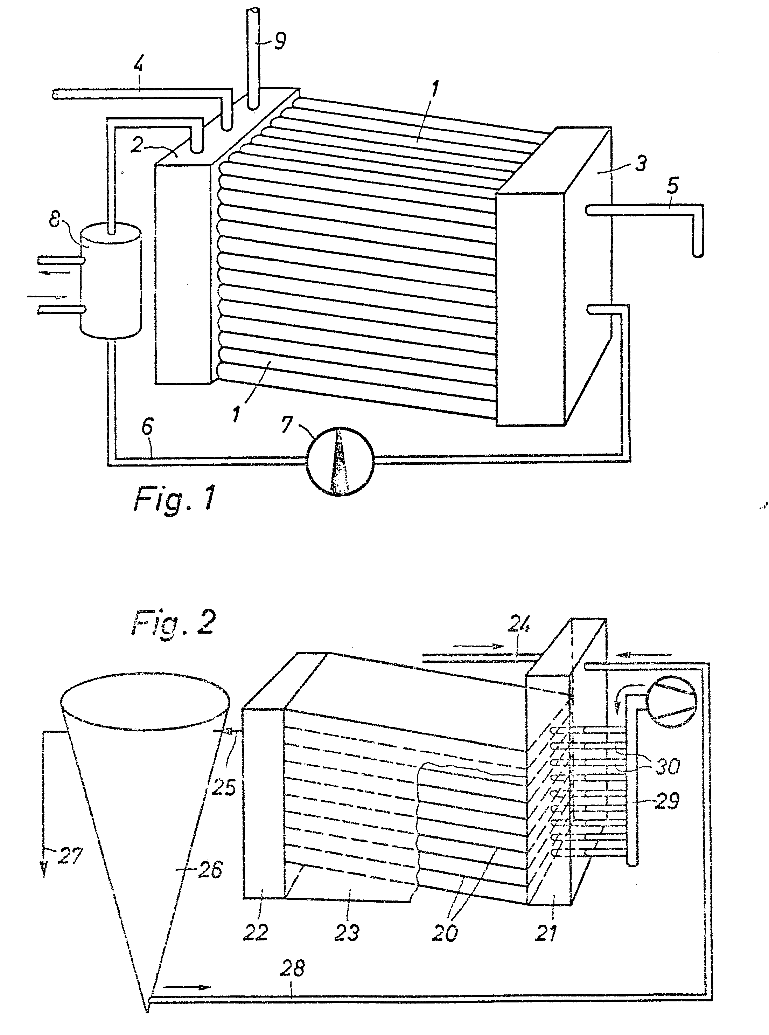

Die in Figur 1 dargestellte Anlage für einen anaeroben Abbau weist als eigentliche Reaktionszone mehrere parallel nebeneinander und übereinander angeordnete Außenrohre 1 auf, wobei jedes Außenrohr 1 eine eigene Reaktionszone bildet. Am einen Ende der Außenrohre 1 ist eine Einlaßkammer 2 und am anderen Ende eine Auslaßkammer 3 so angeschlossen, daß die Außenrohre 1 an beiden Enden untereinander in Verbindung stehen.

Der Einlaßkammer 2 ist ein Zulauf 4 für zu behandelndes organisches Substrat sowie eine Faulgasableitung 9 und der Auslaßkammer ein Ablauf 5 für behandeltes Substrat zugeordnet. Außerdem ist zwischen Auslaßkammer 3 und Einlaßkammer 2 eine Rückführleitung 6 mit Pumpe 7 vorhanden, über die teilgereinigtes Substrat sowie nicht fixierte Biomasse im Kreislauf zurückgeführt werden kann. Zur Nutzung der in der rückgeführten Mischung gespeicherten Wärme ist der Rückführleitung 6 ein Wärmetauscher 8 zugeordnet, über den das zu behandelnde Substrat beispielsweise über ein Wärmeträgermedium und einen weiteren in der Zuleitung 4 des zu behandelnden Substrats vorhandenen Wärmetauscher vorgewärmt werden kann. Als Wärmeisolierung der Reaktionszone sind die mit der Umgebung in Berührung stehenden Außenrohre entweder einzeln mit einer üblichen Rohrisolation oder mit einer flächenmäßig über diese Außenrohre angebrachten Isolationswand versehen. Wie dargestellt ist, ist die Einlaßkammer 2 auf höherem Niveau angeordnet als die Auslaßkammer 3, so daß die Flüssigkeitsströmung durch die Außenrohre mit einem Gefälle verläuft und das entstehende Faulgas entgegen der Flüssigkeitsströmung nach oben zur Einlaßkammer 2 aufsteigt, die auch als Gasabscheidekammer wirkt.

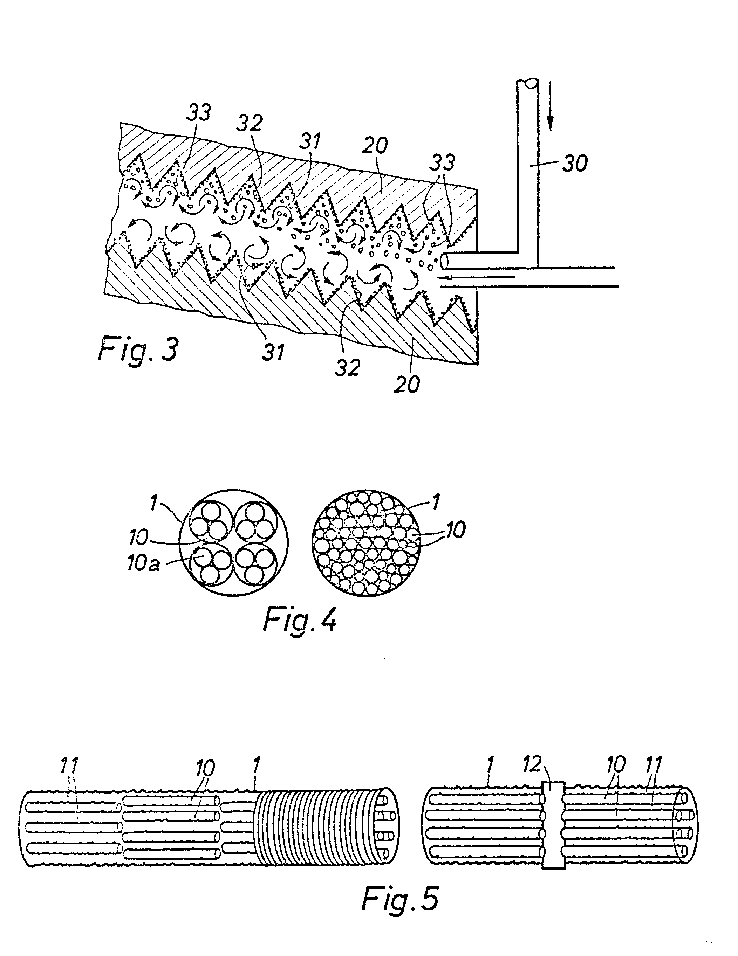

In den Außenrohren, die eine glatte oder gewellte oder gerippte Oberfläche aufweisen können, sind als Trägerelemente für die Biomasse mehrere Innenrohre mit gewellter oder gerippter Oberfläche parallal nebeneinander, ineinandergeschoben oder hintereinander angeordnet. Der Übersichtlichkeit wegen sind diese Innenrohre in der Figur 1 jedoch nicht gezeichnet. Verschiedene Anordnungsmöglichkeiten der rohrförmigen Trägerelemente 10 sind jedoch in den Figuren 4 und 5 dargestellt.

-.-

0135796

Die linke Hälfte der Figur 4 zeigt eine Kombinationsmöglichkeit von vier parallel nebeneinander in einem Außenrohr 1 liegenden rohrförmigen Trägerelementen 10, in denen
jeweils drei weitere rohrförmige Trägerelemente 10a verlegt sind. Selbstverständlich ist die Anzahl der rohrförmigen Trägerelemente nicht durch dieses Darstellungsbeispiel begrenzt.

In der Figur 5 ist die Hintereinanderschaltung von rohrförmigen Trägerelementen 10 dargestellt. Gemäß der linken
Hälfte der Figur 5 sind in einem Außenrohr 1 Gruppen 11
von parallel nebeneinander liegenden rohrförmigen Trägerelementen 10 so achsversetzt hintereinander angeordnet,
daß die rohrförmigen Trägerelemente 10 einer Gruppe 11
nicht mit den rohrförmigen Trägerelementen 10 der nächsten Gruppe 11 fluchten. Gemäß der rechten Hälfte der
Figur 5 sind in einem Außenrohr 1 zwei Gruppen 11 von
parallel nebeneinander liegenden rohrförmigen Trägerelementen 10 durch eine zwischen den beiden Gruppen vorhandene Mischzone 12 getrennt. Dabei können die rohrförmigen Trägerelemente 10 beider Gruppen 11 jeweils
auf der gleichen Rohrachse angeordnet sein. Durch beide
Ausführungsformen wird erreicht, daß sich in den einzelnen rohrförmigen Trägerelementen aller Gruppen 11
weitgehend gleiche Betriebsverhältnisse einstellen.

Aufgrund der Wellen- oder Rippenstruktur zumindest der
Innenrohre werden in der Flüssigkeitsströmung Wirbel
mit Mikroturbulenzen erzeugt, die für eine intensive,
aber schonende Durchmischung von zu behandelndem organischem Substrat und nicht fixierter Biomasse bzw. für
einen intensiven Kontakt zwischen fixierter Biomasse
und zu behandelndem Substrat sorgen. Das dabei entstehende und nach oben aufsteigende Faulgas sammelt
sich in den Vertiefungen an der Oberseite der Rohrbögen

-.-

wobei aufgrund der Wirbelbildungen nur kleine Gasblasen von einer Vertiefung in eine benachbarte Vertiefung getragen werden und zwar bei der geneigten Anordnung der Trägerelemente gemäß der Ausführungsform nach Figur 1 entgegen der Strömungsrichtung des Substrats in die nächste stromaufwärts und damit höher gelegene Vertiefung. Auf diese Weise kann eine Flotationsbewegung der nicht auf den Innenrohren fixierten Biomasse verhindert werden.

Durch einfache Längenänderung der Außenrohre 1 sowie der rohrförmigen Trägerelemente 10 im Inneren der Außenrohre 1 läßt sich ein solcher Reaktor ohne weiteres für den Abbau unterschiedlich belasteter Flüssigkeiten anpassen. Eine Erweiterung des Reaktors durch einen in gleicher Weise aufgebauten Reaktor ist in einfacher Weise möglich, wobei durch eine Übereinanderanordnung beider Reaktor ungünstigen Platzverhältnissen Rechnung getragen werden kann.

Aus Stabilitätsgründen ist es zweckmäßig, die Außenrohre aus einem selbsttragenden Material zu fertigen . Stattdessen können diese aber auch an einem geeigneten Traggerüst aufgehängt werden. Zumindest die rohrförmigen Trägerelemente sollten aus solchen Materialien gefertigt sein, die eine Ansiedlung von Mikroorganismen begünstigen. Besonders preisgünstig sind dabei gewellte Kunststoffrohre, die als Leerrohre für Isolationszwecke in verschiedenen Stärken und Durchmessern bereits angeboten werden.

Die in Figur 2 dargestellte Anlage für einen aeroben Abbau weist als eigentliche Reaktionszone mehrere mit Zwischenräumen parallel übereinander angeordnete plattenförmige Trägerelemente 20 auf, deren Zwischenräume auf zwei gegenüberliegenden Seiten der Trägerelemente 20 über eine Einlaßkammer 21 und eine Auslaßkammer 22 unter-

0135796

einander in Verbindung stehen. Auf den beiden anderen gegenüberliegenden Seiten der plattenförmigen Trägerelemente 20 begrenzen Außenwände 23 die Reaktionszone, wobei die Außenwände 23 jeweils mit der Einlaßkammer 21 und der Auslaßkammer 22 sowie zumindest mit dem obersten und untersten plattenförmigen Trägerelement 20 abschließen.

Der Einlaßkammer 21 ist ein Zulauf 24 für zu behandelnde Flüssigkeit und der Auslaßkammer 22 ein Ablauf 25 für behandelte Flüssigkeit zugeordnet. Der Ablauf 25 ist an ein Nachklärbecken 26 angeschlossen, das eine Ableitung 27 für Klarwasser sowie eine Schlammrückleitung 28 zur Einlaßkammer 21 aufweist. Der Einlaßkammer 21 ist weiterhin eine Gaszuleitung 29 für Sauerstoff und/oder ein sauerstoffhaltiges Gas zugeordnet. An diese Gaszuleitung 29 sind Zweigleitungen 30 angeschlossen, die zu den Zwischenräumen zwischen den einzelnen plattenförmigen Trägerelementen 20 führen.

Der Anschluß jedes einzelnen plattenförmigen Trägerelements 20 an der Einlaßkammer 21 befindet sich auf niedrigerem Niveau als der jeweilige Anschluß des gleichen Trägerelements an der Auslaßkammer 22. Dadurch sind die plattenförmigen Trägerelemente 20 mit einer Steigung angeordnet, so daß die Flüssigkeitsströmung und auch die Gasströmung leicht gegen die Horizontale nach oben verläuft.

Die plattenförmigen Trägerelemente, die ebenso aus einem für die Ansiedlung von Mikroorganismen günstigen Material hergestellt sind, sind vorzugsweise beidseitig mit einer gewellten und/oder gerippten Oberfläche ausgestattet. Damit wir den aeroben Mikroorganismen nicht nur eine große Oberfläche zur Ansiedlung zur Verfügung gestellt, sondern die Wellen- und Rippenstruktur bewirkt eine

-.-

Flüssigkeitsströmung zwischen den einzelnen Trägerelementen, in der durch Wirbelbildung Mikroturbulenzen hervorgerufen werden, über die eine schonende statische Durchmischung von Flüssigkeit, nicht fixierter Biomasse und Sauerstoff bzw. ein intensiver Kontakt von Flüssigkeit, fixierter Biomasse und Sauerstoff erfolgt. Gleichzeitig wird grobblasig eingetragener Sauerstoff aufgrund der Wirbelbildung in kleine Gasblasen zerteilt, die sich jeweils in den Vertiefungen an den Unterseiten der Trägerelemente festhängen und so praktisch bis zur annähernd vollständigen Sauerstoffausnutzung aufgezehrt werden.

In Figur 3 ist ausschnittsweise der Zwischenraum zwischen zwei leicht schräg angeordneten plattenförmigen Trägerelementen 20 mit gerippter Oberfläche dargestellt, wobei anhand von Pfeilen 31 die Wirbelbildung einer vom tiefergelegenen zum höher gelegenen Ende der Trägerelemente verlaufenden Flüssigkeitsströmung gezeigt ist. Zusätzlich ist durch Punkte 32 auf den gerippten Oberflächen die Ansiedlung von Biomasse und durch kleine Kreise 33 die Gasansammlung und Gasverteilung in den Vertiefungen des oberen Trägerelements angedeutet. Das Gas wird dabei über eine der Zweigleitungen 30 am tiefer gelegenen Ende der Trägerelemente zugeführt. Die aus der Zweigleitung 30 aufsteigenden Gasblasen sammeln sich zunächst vermehrt in den dem Ende der Zweigleitung benachbarten Vertiefungen des oberen Trägerelements. Durch die Flüssigkeitsströmung und die Wirbelbildung werden diese Gasblasen dann jedoch in Strömungsrichtung mitgerissen und dabei zerteilt und teils in den in Strömungsrichtung nachfolgenden Vertiefungen angesammelt, teils in der Flüssigkeit gelöst. Auf die gesamte Länge der plattenförmigen Trägerelemente gesehen, ergibt sich dadurch eine nahezu vollständige Sauerstoffausnutzung durch Zehrung.

Falls die Breite der plattenförmigen Trägerelemente 20 sehr groß ist, empfiehlt es sich, jedem Zwischenraum zwischen den plattenförmigen Trägerelementen mehrere Gaszuleitungen nebeneinander zuzuordnen. Auch kann es dann unter Umständen zweckmäßig sein, die plattenförmigen Trägerelemente in Strömungsrichtung geteilt auszuführen und die Vertiefungen und Höhen der beiden Plattenhälften versetzt zueinander anzuordnen.

Obwohl vorstehend ein Reaktor mit plattenförmigen Trägerelementen für einen aeroben Abbau und ein Reaktor mit rohrförmigen Trägerelementen für einen anaeroben Abbau beschrieben ist, ist grundsätzlich auch, wie bereits angedeutet, eine entgegengesetzte Verwendungsart möglich.

Nachfolgend ist je ein zahlenmäßiges Auslegungsbeispiel eines Reaktors nach Figur 1 für einen anaeroben Abbau sowie eines Reaktors nach Figur 2 für einen aeroben Abbau zusammengestellt:

Im ersten Fall wird ausgegangen von einer zulaufenden Abwassermenge von 200 m³/Tag mit einem CSB-Gehalt von 10 000 mg/l und einem 80 %igen Abbau bei einer Schlammbelastung von 0,4 kg CSB/kg TSd. Als Trägerelement wird ein gewelltes Kunststoffrohr mit einem Durchmesser von 3 cm und einem Schlammrückhaltevermögen von 0,16 kg/m laufender Rohrlänge gewählt. Bei einer für die angegebene Schlammbelastung erforderlichen Schlammenge von 5000 kg ergibt sich damit eine erforderliche Rohrlänge von 31 250 m. Wird ein Außenrohr von 10 cm Durchmesser gewählt, können in diesem 7 Innenrohre mit einem Durchmesser von 3 cm verlegt werden, wodurch sich eine erforderliche Außenrohrlänge von 4 464 m ergibt. Bei Verwendung von Außenrohrstücken mit 3 m Länge sind zur Verwirklichung der gesamten notwendigen Außenrohrlänge

-.-

1 488 Außenrohrstücke in einem Stapel zwischen Einlaß- kammer und Auslaßkammer anzuordnen. Die Breite und Höhe des Außenrohrstapels ergibt sich dabei zu 3 bis 5 m.

Im zweiten Fall wird von einer zulaufenden Abwassermenge von 1000 m³/Tag mit einem $BSB_5$-Gehalt von 400 mg/l, was einer organischen Belastung von 400 kg/Tag entspricht, ausgegangen. Gewählt werden plattenförmige Trägerelemente mit gerippter Oberfläche aus Metall, Kunststoff oder Keramik, die eine massive Plattenstärke inklusive Armierungen von 1 cm, eine Rippenhöhe von 2 cm und einen Abstand von Rippenspitze zu Rippenspitze von 8 cm aufweisen. Auf einem solcher Trägerelement kann der Biomassebewuchs (doppelseitig gerechnet) mit 0,5 kg/m² angesetzt werden. Im Reaktor sollen 40 % der Biomasse in frei schwebender Form enthalten sein, während 60 % der Biomasse auf Trägerelementen fixiert sind.

Bei einer Schlammbelastung von 0,25 kg $BSB_5$/kg TS · d errechnet sich ein Belebtschlammbedarf von 1600 kg TS (640 kg frei schwebend, 960 kg fixiert). Bei einer Konzentration des nicht fixierten Belebtschlamms von 215 kg TS/m³ errechnet sich ein Reaktorvolumen von 256 m³. Für die Fixierung von 960 kg Belebtschlamm errechnet sich eine Plattenfläche von 1920 m², was 22,5 Platten (23x4 m) entspricht. Werden 23 solcher Platten eingebaut, erhöht sich das Reaktorvolumen durch den Raumbedarf der Platten auf 276 m³. (Mittlerer Plattenabstand 13 cm). Bei einer angenommenen Sauerstoffausnutzung von 60 % bei Luftbegasung ergibt sich ein Luftbedarf von 2111 Nm³/d = 88 Nm³/h, was erfahrungsgemäß einem speziellen Energieaufwand von 0,1 Kwh/kg abgebauten $BSB_5$ gleichkommt.

## Patentansprüche

1. Verfahren zur biologischen Reinigung von organische Schmutzstoffe enthaltenden Flüssigkeiten und/oder Flüssigkeits-Feststoffgemischen, bei dem die Flüssigkeiten und/oder die Flüssigkeits-Feststoffgemische durch einen Reaktor geleitet werden, in dem die Schmutzstoffe mit Hilfe von auf mindestens einem Trägerelement angesiedelten Mikroorganismen gegebenenfalls unter Zufuhr von Sauerstoff und/oder Sauerstoff enthaltenden Gasen abgebaut werden, dadurch gekennzeichnet, daß mit Hilfe des Trägerelements in der Strömung eine vollständige statische Durchmischung im Mikrobereich erzeugt wird.

2. Anlage zur Durchführung des Verfahrens nach Anspruch 1, zur biologischen Reinigung von organische Schmutzstoffe enthaltenden Flüssigkeiten und/oder Flüssigkeits-Feststoffgemischen mit mindestens einem Reaktor, der einen Zulauf und einen Ablauf und gegebenenfalls eine Gaszuleitung sowie eine Gasableitung aufweist und in dem mindestens ein Trägerelement als Ansiedlungsfläche für die schmutzabbauenden Mikroorganismen vorhanden ist,

- 2 -                           0135796

dadurch gekennzeichnet, daß das Trägerelement (10, 20)
eine gewellte und/oder gerippte Oberfläche aufweist und
gegebenenfalls auch die Reaktorwände zumindest teilweise
eine gewellte und/oder gerippte Oberfläche aufweisen.

3. Anlage nach Anspruch 2, dadurch gekennzeichnet, daß
das Trägerelement als Rohr (10) und/oder Platte (20) ausgebildet ist.

4. Anlage nach Anspruch 2 oder 3, dadurch gekennzeichnet,
daß mehrere Trägerelemente (10, 20) parallel nebeneinander und/oder übereinander angeordnet sind.

5. Anlage nach einem der Ansprüche 2 bis 4, dadurch gekennzeichnet, daß mehrere Trägerelemente (10, 20) hintereinander angeordnet sind.

6. Anlage nach Anspruch 5, dadurch gekennzeichnet, daß die
hintereinander vorgesehenen Trägerelemente (10, 20) versetzt zueinander angeordnet sind und/oder daß zwischen
den hintereinander angeordneten Trägerelementen (10, 20)
Mischkammern (12) ausgebildet sind.

7. Anlage nach einem der Ansprüche 3 bis 6, dadurch gekennzeichnet, daß mehrere rohrförmige Trägerelemente (10)
ineinandergeschoben angeordnet sind.

8. Anlage nach einem der Ansprüche 2 bis 7, dadurch gekennzeichnet, daß das Trägerelement (10, 20) gegen die
Horizontale geneigt angeordnet ist.

- 3 -

0135796

9. Anlage nach einem der Ansprüche 3 bis 8, dadurch gekennzeichnet, daß mehrere rohrförmige Trägerelemente (10) in Außenrohren (1) angeordnet sind, die Außenrohre (1) parallel nebeneinander und/oder übereinander angeordnet sind und die Außenrohre (1) über eine Einlaßkammer (2) sowie eine Auslaßkammer (3) untereinander in Verbindung stehen.

10. Anlage nach einem der Ansprüche 3 bis 8, dadurch gekennzeichnet, daß mehrere plattenförmige Trägerelemente (20) auf zwei gegenüberliegenden Seiten durch Außenwände (23) begrenzt sind und auf den beiden anderen gegenüberliegenden Seiten über eine Einlaßkammer (21) und eine Auslaßkammer (22) untereinander in Verbindung stehen, daß die Außenwände (23) zumindest mit dem obersten und dem untersten plattenförmigen Trägerelement (20) sowie mit der Einlaßkammer (21) und der Auslaßkammer (22) abschließen.

11. Anlage nach Anspruch 9 oder 10 für einen anaeroben Abbau, dadurch gekennzeichnet, daß der Anschluß der Trägerelemente (10, 20) an der Einlaßkammer (2, 21) auf höherem Niveau als an der Auslaßkammer (3, 22) vorgesehen ist und die Einlaßkammer (2, 21) eine Ableitung für Faulgas (9) aufweist.

12. Anlage nach Anspruch 9 oder 10 für einen aeroben Abbau, dadurch gekennzeichnet, daß der Anschluß der Trägerelemente (10, 20) an der Einlaßkammer (2, 21) auf niedrigerem Niveau als an der Auslaßkammer (3, 22) vorgesehen ist, der Einlaßkammer (2, 21) eine Gaszuleitung (29) für Sauerstoff und/oder ein sauerstoffhaltiges Gas zugeordnet ist und die Gaszuleitung (23) Zweigleitungen (30) zu den zwischen den Trägerelementen (10, 20) gebildeten Zwischenräumen aufweist.

-.-

Fig. 1

Fig. 2

0135796

Fig. 3

Fig. 4

Fig. 5